# EUROPEAN PATENT APPLICATION

(11) **EP 4 372 436 A1**
(43) Date of publication of application: **22.05.2024**
(21) Application number: 22869230.7
(22) Date of filing: 14.09.2022
(51) Int. Cl.: G02B 6/14

(54) **OPTICAL COUPLER, OPTICAL CHIP AND OPTICAL COMMUNICATION DEVICE**

(30) Priority: 15.09.2021 CN 202111081500; 17.12.2021 CN 202111552746
(71) Applicant: Huawei Technologies Co., Ltd., Shenzhen, Guangdong 518129 (CN)
(72) Inventor: GUI, Chengcheng, Shenzhen, Guangdong 518129 (CN); ZENG, Cheng, Shenzhen, Hubei 430074 (CN); XIA, Jinsong, Wuhan, Hubei 430074 (CN); SONG, Xiaolu, Shenzhen, Guangdong 518129 (CN)
(74) Representative: Gill Jennings & Every LLP
(86) International application number: PCT/CN2022/118590
(87) International publication number: WO 2023/040861

(57) **Abstract**

An optical coupler is provided, and is applied to the field of optical communication. The optical coupler includes a buried layer (201), a support layer (202), a waveguide layer (203), and an upper cladding layer (204). In a height direction, the support layer (202) is located between the buried layer (201) and the waveguide layer (203), and the waveguide layer (203) is located between the support layer (202) and the upper cladding layer (204). In a width direction, the waveguide layer (203) and the support layer (202) are located inside the upper cladding layer (204). A material of the waveguide layer (203) is different from a material of the support layer (202). The support layer (202) is located inside the upper cladding layer (204). Therefore, two sides of the support layer (202) include the upper cladding layer (204). In this way, energy of an optical signal can be dispersed on the two sides of the support layer (202), so that a degree of uneven energy distribution near a center of the waveguide layer (203) is reduced, thereby reducing a coupling loss of the optical coupler.

## Description

This application claims priorities to Chinese Patent Application No. 202111081500.9, filed with the China National Intellectual Property Administration on September 15, 2021 and entitled "OPTICAL COUPLER, OPTICAL CHIP, AND OPTICAL COMMUNICATION DEVICE", and to Chinese Patent Application No. 202111552746.X, filed with the China National Intellectual Property Administration on December 17, 2021 and entitled "OPTICAL COUPLER, OPTICAL CHIP, AND OPTICAL COMMUNICATION DEVICE", both of which are incorporated herein by reference in their entireties.

### TECHNICAL FIELD

This application relates to the field of optical communication, and in particular, to an optical coupler, an optical chip, and an optical communication device.

### BACKGROUND

In the field of optical communication, different optical components may support different mode spot sizes. For example, different optical components include an optical fiber and an optical transceiver module. A mode spot size supported by the optical transceiver module is usually less than 1 micrometer. A mode spot size supported by a standard single-mode optical fiber is approximately equal to 10 micrometers. An excessively large difference between the mode spot size of the optical fiber and the mode spot size of the optical transceiver module results in an excessively large loss of direct coupling between the optical fiber and the optical transceiver module.

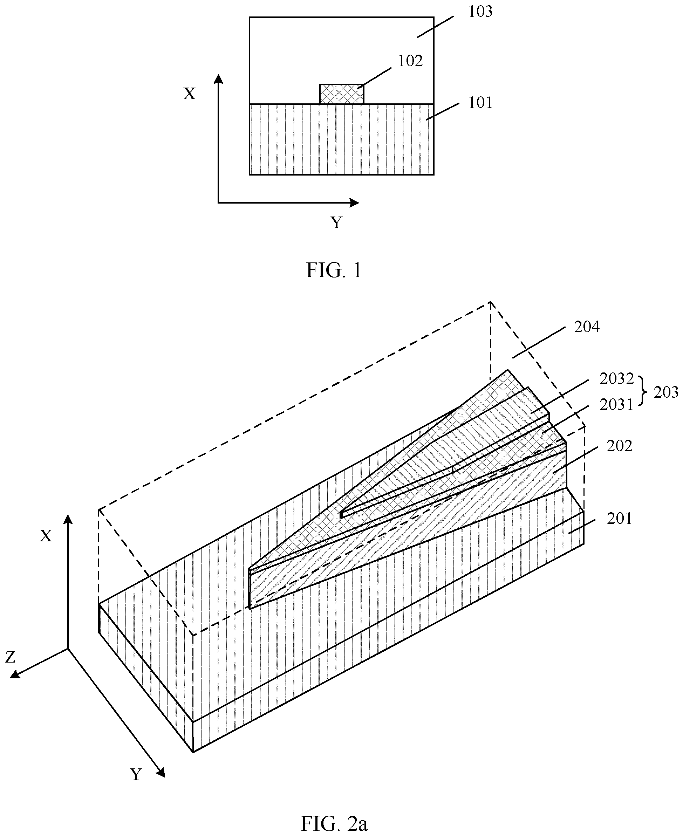

In view of this, a mode spot size of an optical signal may be changed by using an optical coupler, to implement optical coupling between different optical components. For example, FIG. 1 is a schematic diagram of a cross section of an optical coupler in a width direction. As shown in FIG. 1, the optical coupler includes a buried layer 101, a waveguide layer 102, and an upper cladding layer 103. In FIG. 1, a direction of a Y-axis is the width direction, and a direction of an X-axis is a height direction. A direction of a Z-axis that is perpendicular to the X-axis and the Y-axis is a transmission direction. The transmission direction includes a transmission forward direction and a transmission reverse direction. In the transmission forward direction, areas of the waveguide layer 102 gradually decrease, areas of the upper cladding layer 103 gradually increase, and an area of the buried layer 101 remains unchanged. An optical signal is transmitted in the transmission direction. For a reverse optical signal that is from an optical fiber and that is transmitted in the transmission reverse direction, the optical coupler is configured to: reduce a mode spot of the reverse optical signal, and transmit the reverse optical signal whose mode spot is reduced to an optical transceiver module. For a forward optical signal that is from the optical transceiver module and that is transmitted in the transmission forward direction, the optical coupler is configured to: amplify a mode spot of the forward optical signal, and transmit the forward optical signal whose mode spot is amplified to the optical fiber. In a process of implementing optical coupling, a center of the optical fiber is aligned with a center of the waveguide layer 102.

In actual application, a refractive index of the upper cladding layer 103 is greater than a refractive index of the buried layer 101. Therefore, as the areas of the waveguide layer 102 gradually decrease, energy of the optical signal is mainly dispersed at the upper cladding layer 103. In this case, energy of the optical signal at the buried layer 101 is far less than energy of the optical signal at the upper cladding layer 103. This results in a relatively large loss of coupling between the optical coupler and the optical fiber.

### SUMMARY

This application provides an optical coupler, an optical chip, and an optical communication device. A support layer is added, so that a degree of uneven energy distribution near a center of a waveguide layer can be reduced, thereby reducing a coupling loss of the optical coupler.

A first aspect of this application provides an optical coupler. The optical coupler includes a buried layer, a support layer, a waveguide layer, and an upper cladding layer. In a height direction, the support layer is located between the buried layer and the waveguide layer, and the waveguide layer is located between the support layer and the upper cladding layer. In a width direction, the waveguide layer and the support layer are located inside the upper cladding layer. A material of the waveguide layer is different from a material of the support layer.

In this application, the support layer is located inside the upper cladding layer. Therefore, two sides of the support layer include the upper cladding layer. In this way, energy of an optical signal can be dispersed on the two sides of the support layer, so that a degree of uneven energy distribution near a center of the waveguide layer is reduced, thereby reducing a coupling loss of the optical coupler.

In this application, the support layer is of a waveguide structure, and may be a waveguide formed by etching the buried layer, or may be a waveguide formed through deposition, or may be formed in an epitaxial manner or in another manner. This is not limited in this application. The support layer is configured to support a waveguide, but does not have a function of transmitting an optical signal.

A shape of the waveguide of the support layer is the same as a gradient shape of the waveguide layer, and the waveguide of the support layer is located below the waveguide layer, so that the waveguide layer may be symmetrically filled by the upper cladding layer, thereby reducing the coupling loss of the optical coupler.

In an optional manner of the first aspect of this application, a distance between a central position of the waveguide layer and a central position of the upper cladding layer is less than 50 nanometers in the width direction. The distance between the central position of the waveguide layer and the central position of the upper cladding layer is reduced, so that the degree of uneven energy distribution near the center of the waveguide layer can be further reduced, thereby reducing the coupling loss.

In an optional manner of the first aspect of this application, a shape of the upper cladding layer is a square or a circle in the width direction. When the optical coupler is coupled to an optical fiber, the square or circular upper cladding layer can further reduce the coupling loss.

In an optional manner of the first aspect of this application, the optical coupler is configured to connect to the optical fiber. A diameter of the optical fiber is b micrometers. A width a of the square is within an interval b ± 0.5 micrometer, or a diameter a of the circle is within an interval b ± 0.5 micrometer. In this case, a difference between a and b is less than or equal to 0.5 micrometer. When the diameter or width of the upper cladding layer is close to the diameter of the optical fiber, the coupling loss can be further reduced.

In an optional manner of the first aspect of this application, the support layer includes a first end face and a second end face in a transmission direction. An area of the first end face is greater than an area of the second end face. An end face that outputs a forward optical signal transmitted in a transmission forward direction is the second end face. An end face that outputs a reverse optical signal transmitted in a transmission reverse direction is the first end face. When the area of the second end face is relatively small, the degree of uneven energy distribution near the center of the waveguide layer on the second end face can be effectively reduced, thereby reducing a loss.

In an optional manner of the first aspect of this application, widths of the support layer gradually decrease in a direction from the first end face to the second end face. The widths of the support layer gradually decrease, and cross-sectional areas of the upper cladding layer in the width direction gradually increase. Therefore, in this application, the degree of uneven energy distribution near the center of the waveguide layer can be further reduced, thereby reducing the coupling loss.

In an optional manner of the first aspect of this application, a width of the second end face is less than 120 nanometers. A smaller width of the second end face indicates a larger cross-sectional area of the upper cladding layer. The larger cross-sectional area of the upper cladding layer indicates more even energy distribution near the center of the waveguide layer. In this application, it is limited that the width of the second end face is less than 120 nanometers, so that the degree of uneven energy distribution near the center of the waveguide layer can be reduced, thereby reducing the coupling loss.

In an optional manner of the first aspect of this application, the upper cladding layer covers the second end face in the transmission direction. The second end face is covered, so that the cross-sectional area of the upper cladding layer can be further increased. In this way, the degree of uneven energy distribution near the center of the waveguide layer is reduced, thereby reducing the coupling loss.

In an optional manner of the first aspect of this application, the waveguide layer is of a trapezoidal structure in the transmission direction. A width of the waveguide layer gradually decreases in the transmission forward direction. When the waveguide layer includes an upper waveguide layer and a lower waveguide layer, that the waveguide layer is of a trapezoidal structure means that the upper waveguide layer and/or the lower waveguide layer are/is of a trapezoidal structure. In the transmission forward direction, the waveguide layer that is of a trapezoid structure helps disperse the forward optical signal at the upper cladding layer. In this way, the degree of uneven energy distribution near the center of the waveguide layer is reduced, thereby reducing the coupling loss.

In an optional manner of the first aspect of this application, the waveguide layer includes an upper waveguide layer and a lower waveguide layer. A width of the lower waveguide layer is greater than a width of the upper waveguide layer in the width direction. The upper waveguide layer may also be referred to as a ridge waveguide. The waveguide layer is divided into the upper waveguide layer and the lower waveguide layer. This helps reduce a transmission loss of the waveguide. In addition, this helps amplify, in the height direction, a mode spot of an optical signal transmitted in the transmission forward direction. In this way, the degree of uneven energy distribution near the center of the waveguide layer is reduced, thereby reducing the coupling loss.

In an optional manner of the first aspect of this application, the upper waveguide layer includes a first part and a second part. In the transmission direction, the first part is of a rectangular structure, a width of the first part is between 400 nanometers and 2000 nanometers, the second part is of a trapezoidal structure, and a minimum width of the trapezoidal structure is less than 120 nanometers.

In an optional manner of the first aspect of this application, the lower waveguide layer includes a third end face and a fourth end face in the transmission direction. The lower waveguide layer is of a trapezoidal structure. A width of the third end face is greater than a width of the fourth end face. The width of the fourth end face is less than 120 nanometers. The lower waveguide layer that is of a trapezoid structure helps disperse the optical signal at the upper cladding layer. In this way, the degree of uneven energy distribution near the center of the waveguide layer is reduced, thereby reducing the coupling loss.

In an optional manner of the first aspect of this application, a projection of the lower waveguide layer on the buried layer coincides with a projection of the support layer on the buried layer in the transmission direction. When the projection of the lower waveguide layer on the buried layer coincides with the projection of the support layer on the buried layer, the width of the lower waveguide layer is the same as the width of the support layer. When the width of the lower waveguide layer is the same as the width of the support layer, process steps in a processing process can be reduced. Therefore, in this application, costs in the processing process can be reduced.

In an optional manner of the first aspect of this application, a refractive index of a material of the upper cladding layer is greater than a refractive index of the material of the support layer. When the refractive index of the material of the upper cladding layer is greater than the refractive index of the material of the support layer, in the transmission forward direction, energy of the forward optical signal is gradually dispersed at the upper cladding layer. In this way, the degree of uneven energy distribution near the center of the waveguide layer can be reduced, thereby reducing the coupling loss.

In an optional manner of the first aspect of this application, the refractive index of the material of the support layer is less than a refractive index of the material of the waveguide layer. When the refractive index of the material of the support layer is less than the refractive index of the material of the waveguide layer, in the transmission reverse direction, energy of the reverse optical signal is gradually concentrated at the waveguide layer. In this way, the coupling loss is reduced.

In an optional manner of the first aspect of this application, the material of the support layer is silicon dioxide.

In an optional manner of the first aspect of this application, the material of the support layer is the same as a material of the buried layer. When the material of the support layer is the same as the material of the buried layer, the support layer and the buried layer may be obtained by using an etching process. Therefore, in this application, costs in the processing process can be reduced.

In an optional manner of the first aspect of this application, the optical coupler further includes a substrate. The buried layer is located between the substrate and the support layer in the height direction.

In an optional manner of the first aspect of this application, the optical coupler further includes a body part. The body part further includes a body buried layer, a body waveguide layer, and a body upper cladding layer. The body waveguide layer is located between the body buried layer and the body upper cladding layer. A thickness of the body waveguide layer is the same as a thickness of the waveguide layer.

A second aspect of this application provides an optical chip. The optical chip includes a first optical component and an optical coupler. The optical coupler is configured to receive a reverse optical signal from a second optical component. The optical coupler is configured to reduce a mode spot of the reverse optical signal to obtain the reverse optical signal whose mode spot is reduced. The optical coupler is configured to transmit the reverse optical signal whose mode spot is reduced to the first optical component. The first optical component is configured to process the reverse optical signal whose mode spot is reduced.

In an optional manner of the second aspect of this application, the first optical component is an optical transceiver module. The optical transceiver module is configured to demodulate the reverse optical signal whose mode spot is reduced, to obtain an input electrical signal.

In an optional manner of the second aspect of this application, the first optical component is configured to transmit a forward optical signal to the optical coupler. The optical coupler is configured to amplify a mode spot of the forward optical signal to obtain the forward optical signal whose mode spot is amplified. The optical coupler is configured to output the forward optical signal whose mode spot is amplified.

In an optional manner of the second aspect of this application, the first optical component is an optical transceiver module. The optical transceiver module is configured to obtain a second optical signal based on an output electrical signal.

A third aspect of this application provides an optical communication device. The optical communication device includes a processor and an optical chip. The optical chip is configured to: receive a reverse optical signal, and obtain an input electrical signal based on the reverse optical signal. The processor is configured to perform data processing on the input electrical signal.

In an optional manner of the third aspect of this application, the processor is further configured to generate an output electrical signal. The optical chip is further configured to: obtain a forward optical signal based on the output electrical signal, and output the forward optical signal.

A fourth aspect of this application provides a preparation method for an optical coupler. The preparation method includes the following steps: providing a wafer, where the wafer includes a substrate, a bottom layer, and a waveguide layer in a height direction, and the bottom layer is located between the waveguide layer and the substrate; etching two sides of the wafer, where an etching depth reaches an interior of the bottom layer; and dividing the bottom layer into a support layer and a buried layer that have different widths, where the support layer is located between the buried layer and the waveguide layer in the height direction, the width of the support layer is less than the width of the buried layer, and a width of the waveguide layer after the etching is less than the width of the buried layer; and epitaxially growing an upper cladding layer on an etched wafer.

In an optional manner of the fourth aspect of this application, the preparation method includes the following step: etching the upper cladding layer, so that a shape of the upper cladding layer is a square or a circle in a width direction.

In an optional manner of the fourth aspect of this application, the etched wafer includes an upper waveguide layer and a lower waveguide layer that have different widths. The lower waveguide layer is located between the support layer and the upper waveguide layer in the height direction. The width of the lower waveguide layer is greater than the width of the lower waveguide.

### BRIEF DESCRIPTION OF DRAWINGS

FIG. 1 is a schematic diagram of a cross section of an optical coupler in a width direction;
FIG. 2a is a schematic diagram of a first three-dimensional structure of an optical coupler according to this application;
FIG. 2b is a main view of an optical coupler according to this application;
FIG. 2c is a first top view of an optical coupler according to this application;
FIG. 2d is a schematic diagram of a first cross section of an optical coupler according to this application;
FIG. 2e is a schematic diagram of a second cross section of an optical coupler according to this application;
FIG. 2f is a schematic diagram of a third cross section of an optical coupler according to this application;
FIG. 2g is a schematic diagram of a fourth cross section of an optical coupler according to this application;
FIG. 2h is a schematic diagram of a fifth cross section of an optical coupler according to this application;
FIG. 3 is a schematic diagram of a cross section of a circular upper waveguide layer according to this application;
FIG. 4a is a schematic diagram of a second three-dimensional structure of an optical coupler according to this application;
FIG. 4b is a second top view of an optical coupler according to this application;
FIG. 4c is a schematic diagram of a sixth cross section of an optical coupler according to this application;
FIG. 5 is a schematic diagram of a structure of an optical coupler according to this application;
FIG. 6 is a schematic diagram of a structure of an optical chip according to this application;
FIG. 7 is a schematic diagram of a structure of an optical communication device according to this application;
FIG. 8 is a schematic diagram of a structure of an optical communication system according to this application; and
FIG. 9 is a schematic flowchart of a preparation method for an optical coupler according to this application.

### DESCRIPTION OF EMBODIMENTS

This application provides an optical coupler, an optical chip, and an optical communication device. A support layer is added, so that a degree of uneven energy distribution near a center of a waveguide layer can be reduced, thereby reducing a coupling loss of the optical coupler. It should be understood that terms "first", "second", "forward", "reverse", and the like used in this application are merely for differentiation and description, but cannot be understood as an indication or implication of relative importance or an indication or implication of a sequence. In addition, for brevity and clarity, reference numbers and/or letters are repeated in a plurality of accompanying drawings of this application. Repetition does not indicate that there is a strictly restrictive relationship between various embodiments and/or configurations.

The optical coupler in this application may be applied to the field of optical communication. In the field of optical communication, different optical components may support different mode spot sizes. In view of this, a mode spot size of an optical signal may be changed by using an optical coupler, to implement optical coupling between different optical components. However, in the optical coupler shown in FIG. 1, energy distribution of the optical signal near the center of the waveguide layer 102 is uneven. This results in a relatively large coupling loss of the optical coupler.

In view of this, this application provides an optical coupler. FIG. 2a is a schematic diagram of a first three-dimensional structure of an optical coupler according to this application. In FIG. 2a, a direction of a Y-axis is a width direction, a direction of an X-axis is a height direction, and a direction of a Z-axis is a transmission direction. The transmission direction may be classified into a transmission forward direction and a transmission negative direction. In FIG. 2a, an arrow direction of the Z-axis is the transmission forward direction. A reverse direction of the arrow direction of the Z-axis is the transmission reverse direction. An optical signal transmitted in the transmission forward direction is referred to as a forward optical signal. An optical signal transmitted in the transmission reverse direction is referred to as a reverse optical signal.

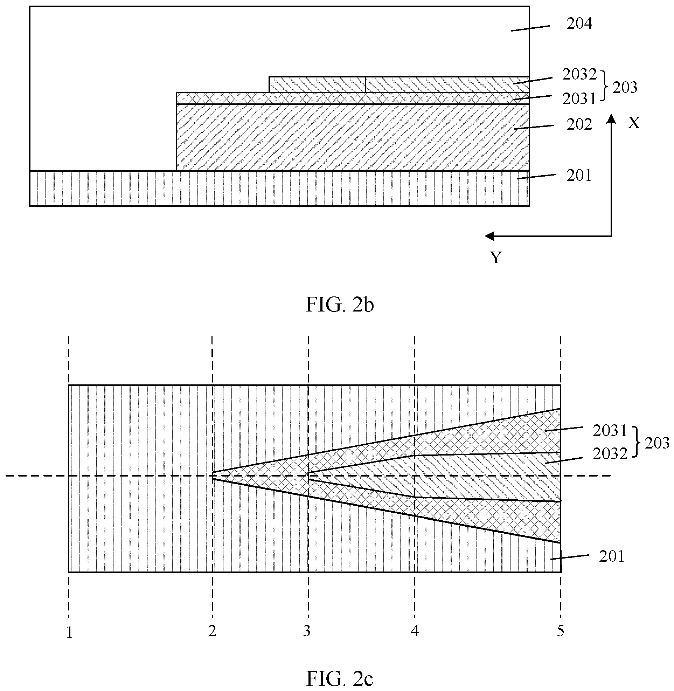

In this application, to facilitate display of an internal structure of the optical coupler, transparency processing is performed on an upper cladding layer 204 in a schematic diagram of a three-dimensional structure and a top view of the optical coupler. As shown in FIG. 2a, the optical coupler includes a buried layer 201, a support layer 202, a waveguide layer 203, and an upper cladding layer 204. FIG. 2b is a main view of the optical coupler according to this application. As shown in FIG. 2b, in the height direction, the support layer 202 is located between the buried layer 201 and the waveguide layer 203, and the waveguide layer 203 is located between the support layer 202 and the upper cladding layer 204. The waveguide layer 203 and the buried layer 201 are covered by the upper cladding layer 204. To amplify a mode spot of an optical signal in the height direction, the waveguide layer 203 may include an upper waveguide layer and a lower waveguide layer. For example, in FIG. 2b, the waveguide layer 203 includes an upper waveguide layer 2032 and a lower waveguide layer 2031. The lower waveguide layer 2031 is located between the support layer 202 and the upper waveguide layer 2032.

A material of the buried layer 201 may be silicon dioxide, quartz, or the like. A material of the support layer 202 may be oxide, fluoride, or the like. The oxide may be silicon dioxide, magnesium oxide, aluminum oxide, or the like. A material of the waveguide layer 203 may be a lithium niobate film, silicon, silicon nitride, indium phosphate, or the like. When the waveguide layer 203 includes the upper waveguide layer 2032 and the lower waveguide layer 2031, a material of the upper waveguide layer 2032 may be the same as or different from a material of the lower waveguide layer 2031. A material of the upper cladding layer 204 may be silicon oxynitride, oxide, fluoride, or the like. To reduce costs in a processing process, the material of the buried layer 201 may be the same as the material of the support layer 202. For example, the material of the buried layer 201 and the material of the support layer 202 are silicon dioxide. To enable energy of a forward optical signal to be mainly dispersed at the upper cladding layer 204, a refractive index of the material of the upper cladding layer 204 may be greater than a refractive index of the material of the support layer 202 and a refractive index of the material of the buried layer 201. To enable energy of a reverse optical signal to be mainly concentrated at the waveguide layer 203, a refractive index of the material of the waveguide layer 203 may be greater than the refractive index of the material of the upper cladding layer 204.

In this application, the optical coupler may be configured to amplify a mode spot of the forward optical signal. The optical coupler may be further configured to reduce a mode spot of the reverse optical signal. Therefore, a structure of the optical coupler may change in the transmission direction. For example, FIG. 2c is a first top view of the optical coupler according to this application. As shown in FIG. 2c, the structure of the optical coupler is symmetric along a center line. Cross sections (or end faces) 1 to 5 divide the optical coupler into four parts. The four parts are a part 1 between the cross section 1 and the cross section 2, a part 2 between the cross section 2 and the cross section 3, a part 3 between the cross section 3 and the cross section 4, and a part 4 between the cross section 4 and the cross section 5. The cross sections 1 to 5 are perpendicular to the transmission direction. The cross section 1 is a cut-off cross section of the optical coupler. The cross section 2 is a cut-off cross section of the lower waveguide layer 2031 and the support layer 202. The cross section 3 is a cut-off cross section of the upper waveguide layer 2032. The cross section 4 is a boundary cross section of a first part and a second part of the upper waveguide layer 2032. The cross section 4 is a cut-off cross section of the support layer 202. The cross section 5 is a cut-off cross section of the optical coupler. The following separately describes the four parts according to schematic diagrams 2d to 2h of cross sections. It should be understood that specific sizes of the optical coupler provided in this application are merely one or more examples, but should not be used as a condition for limiting the protection scope of this application.

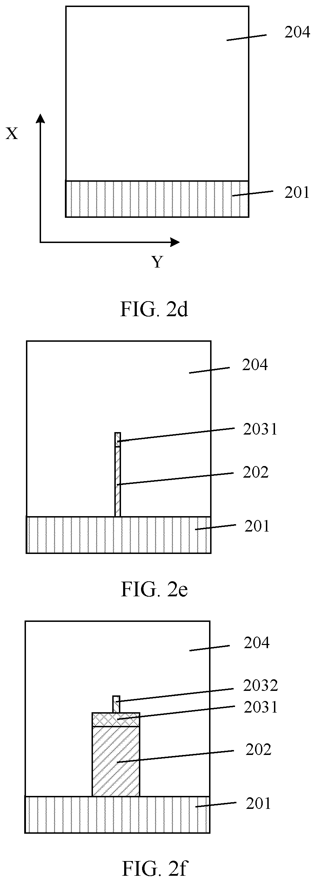

FIG. 2d is a schematic diagram of a first cross section of the optical coupler according to this application. FIG. 2d is a schematic cross-sectional diagram of the cross section 1. As shown in FIG. 2d, the optical coupler includes the buried layer 201 and the upper cladding layer 204. A thickness of the upper cladding layer 204 is 6500 nanometers. A width of the upper cladding layer 204 is 6500 nanometers. A width of the buried layer 201 is the same as the width of the upper cladding layer 204. A thickness of the buried layer 201 is 1700 nanometers.

FIG. 2e is a schematic diagram of a second cross section of the optical coupler according to this application. FIG. 2e is a schematic cross-sectional diagram of the cross section 2. FIG. 2e may also be referred to as a left view of the optical coupler. As shown in FIG. 2e, the optical coupler includes the buried layer 201, the support layer 202, the lower waveguide layer 2031, and the upper cladding layer 204. A thickness of the lower waveguide layer 2031 is 250 nanometers. A width of the lower waveguide layer 2031 is 100 nanometers. A width of the support layer 202 is the same as the width of the lower waveguide layer 2031. A thickness of the support layer 202 is 3000 nanometers. A distance from the cross section 1 to the cross section 2 is equal to 500 micrometers. From the cross section 1 to the cross section 2, the thicknesses and widths of the upper cladding layer 204 and the buried layer 201 in the part 1 do not change. A cross-sectional area of the upper cladding layer 204 does not change.

FIG. 2f is a schematic diagram of a third cross section of the optical coupler according to this application. FIG. 2f is a schematic cross-sectional diagram of the cross section 3. As shown in FIG. 2f, the optical coupler includes the buried layer 201, the support layer 202, the lower waveguide layer 2031, the upper waveguide layer 2032, and the upper cladding layer 204. A thickness of the upper waveguide layer 2032 is 250 nanometers. A width of the upper waveguide layer 2032 is 100 nanometers. A width of the lower waveguide layer 2031 is 1200 nanometers. A width of the support layer 202 is 1200 nanometers. A distance from the cross section 2 to the cross section 3 is equal to 100 micrometers. From the cross section 2 to the cross section 3, the thickness and width of the upper cladding layer 204 in the part 2 do not change. Cross-sectional areas of the upper cladding layer 204 gradually decrease. The thickness and width of the buried layer 201 do not change. The thicknesses of the support layer 202 and the lower waveguide layer 2031 do not change. The widths of the support layer 202 and the lower waveguide layer 2031 gradually increase.

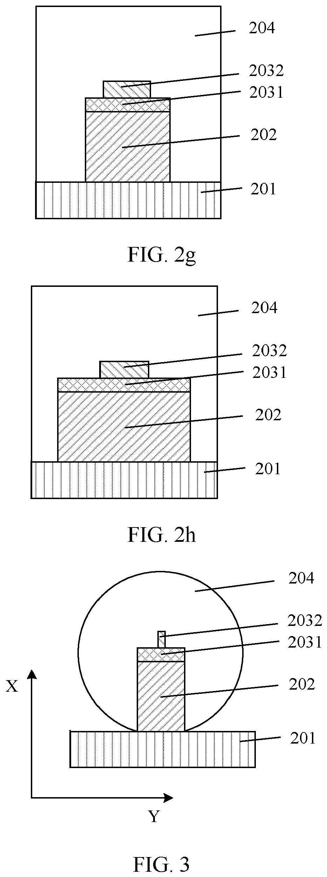

FIG. 2g is a schematic diagram of a fourth cross section of the optical coupler according to this application. FIG. 2g is a schematic cross-sectional diagram of the cross section 4. As shown in FIG. 2g, the optical coupler includes the buried layer 201, the support layer 202, the lower waveguide layer 2031, the upper waveguide layer 2032, and the upper cladding layer 204. A width of the upper waveguide layer 2032 is 1200 nanometers. A width of the lower waveguide layer 2031 is 2600 nanometers. A width of the support layer 202 is 2600 nanometers. A distance from the cross section 3 to the cross section 4 is equal to 100 micrometers. From the cross section 3 to the cross section 4, the thickness and width of the upper cladding layer 204 in the part 3 do not change. The cross-sectional areas of the upper cladding layer 204 gradually decrease. The thickness and width of the buried layer 201 do not change. The thicknesses of the support layer 202 and the lower waveguide layer 2031 do not change. The widths of the support layer 202 and the upper waveguide layer 2032 gradually increase. The thicknesses of the upper waveguide layer 2032 and the lower waveguide layer 2031 do not change. The widths of the lower waveguide layer 2031 gradually increase.

FIG. 2h is a schematic diagram of a fifth cross section of the optical coupler according to this application. FIG. 2h is a schematic cross-sectional diagram of the cross section 5. FIG. 2h may also be referred to as a right view of the optical coupler. As shown in FIG. 2h, the optical coupler includes the buried layer 201, the support layer 202, the lower waveguide layer 2031, the upper waveguide layer 2032, and the upper cladding layer 204. A width of the lower waveguide layer 2031 is 4000 nanometers. A width of the support layer 202 is 4000 nanometers. A distance from the cross section 4 to the cross section 5 is equal to 100 micrometers. The thickness and width of the upper cladding layer 204 in the part 4 do not change. The cross-sectional areas of the upper cladding layer 204 gradually decrease. The thickness and width of the buried layer 201 do not change. The width of the upper waveguide layer 2032 does not change. The thicknesses of the support layer 202 and the lower waveguide layer 2031 do not change. The widths of the support layer 202 and the lower waveguide layer 2031 gradually increase.

In this application, it can be learned from FIG. 2e to FIG. 2h that two sides of the support layer 202 include the upper cladding layer. Therefore, energy of an optical signal can be dispersed on the two sides of the support layer 202, so that a degree of uneven energy distribution near a center of the waveguide layer 203 is reduced, thereby reducing a coupling loss of the optical coupler.

It should be understood that the optical couplers shown in FIG. 2a to FIG. 2h are merely one or more instances provided in this application. In actual application, a person skilled in the art may adaptively modify the optical coupler based on a requirement. After an adaptive modification, if the optical coupler includes the support layer, the optical coupler still falls within the protection scope of this application. The adaptive modification includes but is not limited to one or more of the following content.

For example, in FIG. 2d to FIG. 2h, a shape of the upper cladding layer 204 is a square. In actual application, a shape of the upper cladding layer 204 may alternatively be a rectangle or a circle. For example, FIG. 3 is a schematic diagram of a cross section of a circular upper waveguide layer according to this application. As shown in FIG. 3, the optical coupler includes the buried layer 201, the support layer 202, the lower waveguide layer 2031, the upper waveguide layer 2032, and the upper cladding layer 204. A shape of the upper cladding layer 204 is a circle.

For example, in FIG. 2d to FIG. 2h, the thickness and width of the upper cladding layer 204 are 6.5 micrometers. In actual application, a side length a of the upper cladding layer 204 may be within an interval b ± 0.5 micrometer. b represents a mode field diameter of an optical fiber connected to the optical coupler. b may be equal to 10.4 micrometers, 6.5 micrometers, or 3.2 micrometers. Similarly, when the shape of the upper cladding layer 204 is a circle, a diameter a of the circle may be within an interval b ± 0.5 micrometer.

For example, in FIG. 2d to FIG. 2h, a central position of the upper cladding layer 204 is an intersection point of diagonal lines of the upper cladding layer 204. A lower left corner of the optical coupler is used as an origin of coordinates, and coordinates (Y, X) of the central position of the upper cladding layer 204 are (3.25, 4.95). A central position of the waveguide layer 203 is a midpoint of a boundary line between the upper waveguide layer 2032 and the lower waveguide layer 2031. Coordinates (Y, X) of the central position of the waveguide layer 203 (briefly referred to as the center of the waveguide layer 203) are (3.25, 4.95). In this case, the central position of the waveguide layer 203 coincides with the central position of the upper cladding layer 204, that is, a distance between the central position of the waveguide layer 203 and the central position of the upper cladding layer 204 is equal to 0. In actual application, the distance between the central position of the waveguide layer 203 and the central position of the upper cladding layer 204 may not be equal to 0. For example, the distance is equal to 40 nanometers. However, to minimize the degree of uneven energy distribution near the center of the waveguide layer 203, it may be limited that the distance between the central position of the waveguide layer 203 and the central position of the upper cladding layer 204 is less than 50 nanometers. It should be understood that the central position of the waveguide layer 203 may alternatively be a center of gravity of the waveguide layer 203. When the thickness of the upper waveguide layer 2032 is greater than the thickness of the lower waveguide layer 2031, the central position of the waveguide layer 203 may alternatively be a center of gravity of the upper waveguide layer 2032. When the thickness of the upper waveguide layer 2032 is less than the thickness of the lower waveguide layer 2031, the central position of the waveguide layer 203 may alternatively be a center of gravity of the lower waveguide layer 2031.

For example, in FIG. 2e to FIG. 2h, the width of the support layer 202 is equal to the width of the lower waveguide layer 2031. A projection of the lower waveguide layer 2031 on the buried layer 201 coincides with a projection of the support layer 202 on the buried layer 201. In actual application, the width of the support layer 202 may be greater than or less than the width of the lower waveguide layer 2031. In FIG. 2c, the support layer 202 is of a trapezoidal structure. The trapezoidal structure includes a first end face and a second end face. The first end face is on the cross section 5. The second end face is on the cross section 2. An area of the first end face is greater than an area of the second end face. Widths of the support layer 202 gradually decrease in a direction from the first end face to the second end face. In actual application, the support layer 202 may be of a rectangular structure. In this case, the areas of the first end face and the second end face of the support layer 202 are the same. The width of the support layer 202 does not change in the direction from the first end face to the second end face.

For example, in FIG. 2e, a width of the second end face of the support layer 202 is equal to 100 nanometers. In actual application, the width of the second end face may alternatively be another value, for example, 110 nanometers, 120 nanometers, or the like. However, a smaller width of the second end face indicates a larger cross-sectional area of the upper cladding layer 204. The larger cross-sectional area of the upper cladding layer 204 indicates more even energy distribution near the center of the waveguide layer 203. Therefore, in this application, it may be limited that the width of the second end face is less than 120 nanometers.

For example, in FIG. 2c, the upper waveguide layer 2032 includes a first part and a second part. The first part is of a rectangular structure. The first part is located between the cross section 5 and the cross section 4. A width of the first part is between 400 nanometers and 2000 nanometers. The second part is of a trapezoidal structure. The second part is located between the cross section 4 and the cross section 3. A minimum width of the trapezoidal structure is less than 120 nanometers. The minimum width of the trapezoidal structure is on the cross section 3. The minimum width of the trapezoidal structure is equal to 100 nanometers. In actual application, the upper waveguide layer 2032 may be of a trapezoidal structure. Widths of the trapezoidal structure gradually decrease in the transmission forward direction.

For example, in FIG. 2e, the lower waveguide layer 2031 is of a trapezoidal structure. The trapezoidal structure includes a third end face and a fourth end face. The third end face is on the cross section 5. The fourth end face is on the cross section 2. A width of the third end face is greater than a width of the fourth end face. The width of the fourth end face is less than 120 nanometers. In actual application, the lower waveguide layer 2031 may include a third part and a fourth part. The third part is located between the cross section 4 and the cross section 5. The third part is of a rectangular structure. The fourth part is located between the cross section 4 and the cross section 2. The fourth part is of a trapezoidal structure.

For example, the optical coupler may further include a substrate. The buried layer 201 is located between the substrate and the support layer 202 in the height direction. A material of the substrate may be high-resistance silicon, low-resistance silicon, or a quartz lamp.

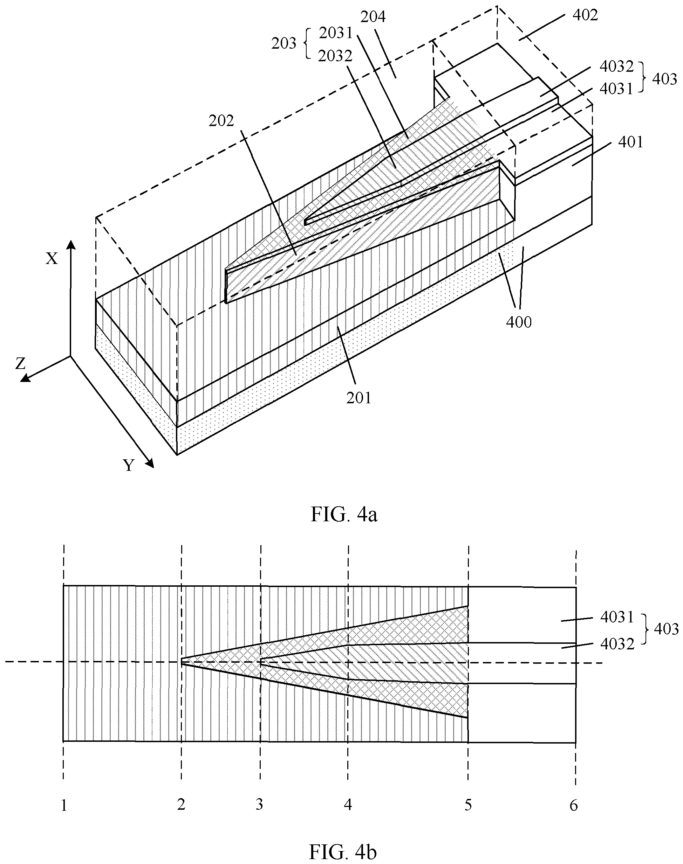

For example, the optical coupler may further include a body part. FIG. 4a is a schematic diagram of a second three-dimensional structure of an optical coupler according to this application. As shown in FIG. 4a, the optical coupler includes a protruding part (a part filled with a pattern in the figure) and a local part (a part not filled with a pattern in the figure). The protruding part includes a substrate 400, a buried layer 201, a support layer 202, a waveguide layer 203, and an upper waveguide layer 204. For a related description of the protruding part, refer to the foregoing descriptions of FIG. 2a to FIG. 2h and FIG. 3. The body part includes the substrate 400, a body buried layer 401, a body waveguide layer 403, and a body upper cladding layer 402. In a height direction, the body waveguide layer 403 is located between the body buried layer 401 and the body upper cladding layer 402, and the body buried layer 401 is located between the body waveguide layer 403 and the substrate 400. A thickness of the body buried layer 401 is equal to a sum of a thickness of the buried layer 201 and a thickness of the support layer 202. The body waveguide layer 403 includes a body upper waveguide layer 4032 and a body lower waveguide layer 4031. A thickness of the body upper waveguide layer 4032 is equal to the thickness of the upper waveguide layer 2032. A thickness of the body lower waveguide layer 4031 is equal to the thickness of the lower waveguide layer 2031. A width of the body lower waveguide layer 4031 is equal to the width of the lower waveguide layer 2031. A material of the body upper cladding layer 402 may be silicon oxynitride, oxide, fluoride, or the like. A material of the body buried layer 401 may be oxide, fluoride, or the like.

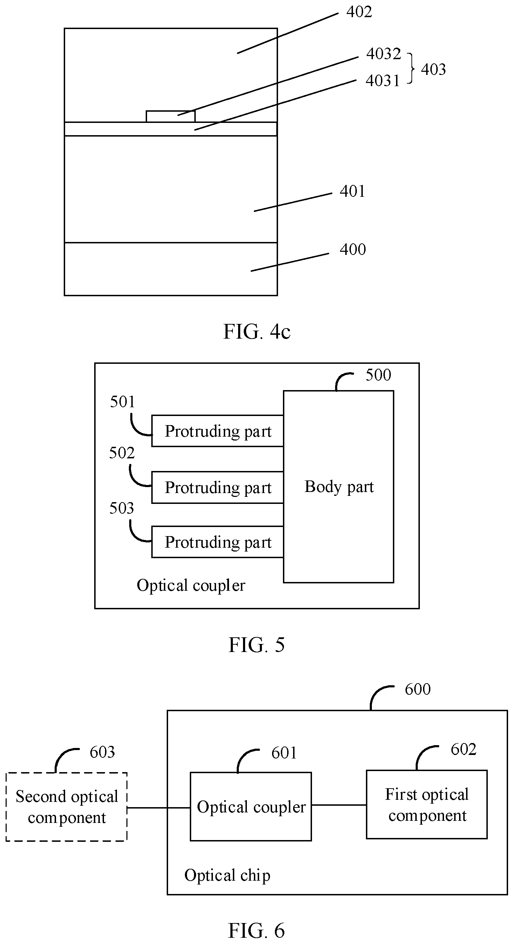

FIG. 4b is a second top view of the optical coupler according to this application. As shown in FIG. 4b, the optical coupler includes the protruding part and the local part. The protruding part is located between the cross section 1 and the cross section 5. For a description of the protruding part, refer to the related description in FIG. 2c. The body part is located between the cross section 5 and a cross section 6. The cross section 5 is a cut-off cross section of the support layer 202. The cross section 6 is a cut-off cross section of the optical coupler. FIG. 4c is a schematic diagram of a sixth cross section of the optical coupler according to this application. FIG. 4c is a schematic cross-sectional diagram of the cross section 6. FIG. 4c may also be referred to as a right view of the optical coupler. As shown in FIG. 4c, the optical coupler includes the substrate 400, the body buried layer 401, the body waveguide layer 403, and the body upper cladding layer 402. The body waveguide layer 403 includes the body upper waveguide layer 4032 and the body lower waveguide layer 4031. The body upper waveguide layer 4032 and the body lower waveguide layer 4031 are covered by the body upper cladding layer 402.

In the optical coupler in FIG. 4a, a width of the body part is equal to a width of the protruding part. In actual application, the width of the body part may be greater than the width of the protruding part. In this case, the body part may be connected to a plurality of protruding parts. For example, FIG. 5 is a schematic diagram of a structure of an optical coupler according to this application. As shown in FIG. 5, the optical coupler includes a local part 500. A side of the body part is connected to three protruding parts. The three protruding parts are a protruding part 501, a protruding part 502, and a protruding part 503.

The foregoing describes the optical coupler in this application, and the following describes an optical chip in this application. FIG. 6 is a schematic diagram of a structure of an optical chip according to this application. As shown in FIG. 6, the optical chip 600 includes an optical coupler 601 and a first optical component 602. For a description of the optical coupler 601, refer to the descriptions in FIG. 2a to FIG. 2h and FIG. 3 to FIG. 5. The optical coupler 601 is configured to receive a reverse optical signal from a second optical component 603. The optical coupler 601 is configured to reduce a mode spot of the reverse optical signal to obtain the reverse optical signal whose mode spot is reduced. For example, the second optical component 603 is an optical fiber. In FIG. 2a to FIG. 2c, the optical fiber is coupled to a left end face (a cross section 1) of the optical coupler 601. A center of the optical fiber is aligned with a center of a waveguide layer 203 in the optical coupler 601. The optical coupler 601 receives the reverse optical signal from the left end face. As the reverse optical signal is transmitted in the optical coupler 601 in a transmission reverse direction, energy of the reverse optical signal is gradually concentrated at the waveguide layer 203, so that the mode spot of the reverse optical signal is gradually reduced. The optical coupler 601 is further configured to transmit the reverse optical signal whose mode spot is reduced to the first optical component 602. The first optical component 602 is configured to process the reverse optical signal. For example, the first optical component 602 is an optical transceiver module. The optical transceiver module is configured to demodulate the reverse optical signal to obtain an input electrical signal. It should be understood that the first optical component 602 may be a wavelength division multiplexer, a wavelength division demultiplexer, an optical switch, a mode spot converter, a multiplexer, a beam splitter, or the like.

In actual application, the first optical component 602 may be further configured to transmit a forward optical signal to the optical coupler 601. For example, the first optical component 602 is an optical transceiver module. The optical transceiver module is configured to modulate an output electrical signal to obtain the forward optical signal. The optical transceiver module is configured to transmit the forward optical signal to the optical coupler 601. The optical coupler 601 is configured to amplify a mode spot of the forward optical signal to obtain the forward optical signal whose mode spot is amplified. For example, in FIG. 2a to FIG. 2c, the first optical component 602 is coupled to a right end face (a cross section 5) of the optical coupler 601. The optical coupler 601 receives the forward optical signal from the right end face. As the forward optical signal is transmitted in the optical coupler 601 in a transmission forward direction, energy of the forward optical signal is gradually dispersed at an upper cladding layer 204, so that the mode spot of the forward optical signal is gradually amplified. The optical coupler 601 is configured to transmit the forward optical signal whose mode spot is amplified to the second optical component 603.

When the optical coupler 601 is the optical coupler shown in FIG. 5, the optical coupler includes a plurality of protruding parts. The optical coupler 601 may be connected to a plurality of second optical components. The plurality of second optical components are in a one-to-one correspondence with the plurality of protruding parts. A plurality of optical signals transmitted in the plurality of protruding parts may have a same wavelength, or may have different wavelengths. For example, when the first optical component 602 is a beam splitter, the plurality of optical signals have a same wavelength. When the first optical component 602 is a demultiplexer, the plurality of optical signals have different wavelengths.

In actual application, the second optical component 603 is alternatively an optical switch, a mode spot converter, or the like. In this case, the second optical component 603 may be integrated into the optical chip 600, that is, the optical chip 600 may further include the second optical component 603.

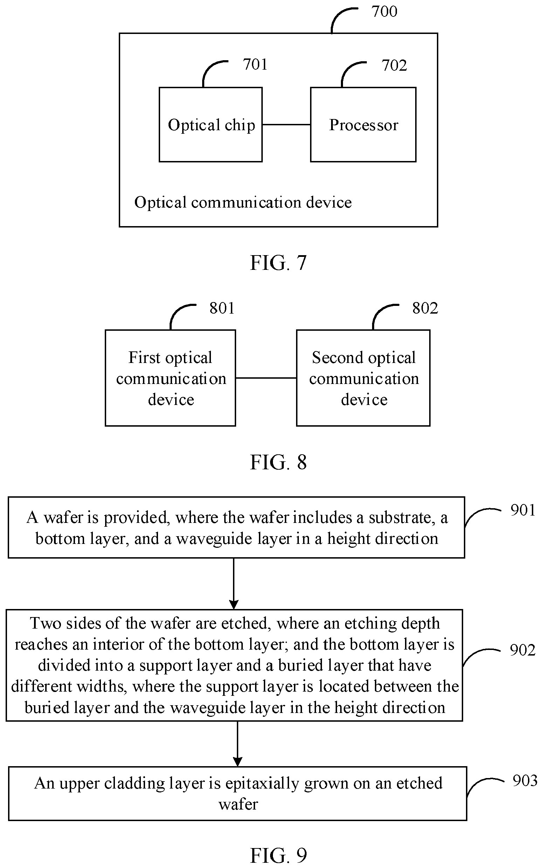

The foregoing describes the optical chip in this application, and the following describes an optical communication device in this application. FIG. 7 is a schematic diagram of a structure of an optical communication device according to this application. As shown in FIG. 7, the optical communication device 700 includes an optical chip 701 and a processor 702. For a description of the optical chip 701, refer to the description in FIG. 6. The optical chip 701 is configured to: receive a reverse optical signal, and obtain an input electrical signal based on the reverse optical signal. Specifically, the optical chip 701 includes an optical coupler and an optical transceiver module. The optical coupler 601 is configured to reduce a mode spot of the reverse optical signal to obtain the reverse optical signal whose mode spot is reduced. The optical transceiver module is configured to demodulate the reverse optical signal to obtain the input electrical signal. The processor 702 is configured to perform data processing on the input electrical signal.

The processor 702 may be a central processing unit (central processing unit, CPU), a network processor (network processor, NP), or a combination of a CPU and an NP. The processor 702 may further include a hardware chip or another general-purpose processor. The hardware chip may be an application-specific integrated circuit (application-specific integrated circuit, ASIC), a programmable logic device (programmable logic device, PLD), or a combination thereof. The general-purpose processor may be a microprocessor, or the processor may be any conventional processor or the like.

In another embodiment, the processor 702 may be further configured to generate an output electrical signal. The optical chip 701 is further configured to: obtain a forward optical signal based on the output electrical signal, and output the forward optical signal. For example, the optical chip 701 is an optical transceiver module. The optical transceiver module is configured to modulate the output electrical signal to obtain the forward optical signal. The optical coupler is configured to amplify a mode spot of the forward optical signal to obtain the forward optical signal whose mode spot is amplified. The optical coupler is configured to output the forward optical signal whose mode spot is amplified.

The foregoing describes the optical communication device in this application, and the following describes an optical communication system in this application. FIG. 8 is a schematic diagram of a structure of an optical communication system according to this application. As shown in FIG. 8, the optical communication system includes a first optical communication device 801 and a second optical communication device 802. The first optical communication device 801 and the second optical communication device 802 are connected through an optical fiber. For the first optical communication device 801 and the second optical communication device 802, refer to the related description of the optical communication device 700 in FIG. 7.

The first optical communication device 801 includes an optical chip and a processor. The processor is configured to generate an output electrical signal. The optical chip is configured to obtain a forward optical signal based on the output electrical signal. Specifically, the optical chip includes an optical coupler and an optical transceiver module. The optical transceiver module is configured to modulate the output electrical signal to obtain the forward optical signal. The optical coupler is configured to amplify a mode spot of the forward optical signal to obtain the forward optical signal whose mode spot is amplified. The optical coupler is configured to output the forward optical signal whose mode spot is amplified to the optical fiber.

The forward optical signal sent by the first optical communication device 801 is used as a reverse optical signal of the second optical communication device 802. The second optical communication device 802 is configured to receive the reverse optical signal through the optical fiber. The second optical communication device 802 includes an optical chip and a processor. The optical chip is configured to: receive the reverse optical signal, and obtain an input electrical signal based on the reverse optical signal. Specifically, the optical chip includes an optical coupler and an optical transceiver module. The optical coupler is configured to reduce a mode spot of the reverse optical signal to obtain the reverse optical signal whose mode spot is reduced. The optical transceiver module is configured to demodulate the reverse optical signal to obtain the input electrical signal. The processor is configured to perform data processing on the input electrical signal.

Similarly, in actual application, the second optical communication device 802 may send a forward optical signal to the first optical communication device 801 through the optical fiber. The forward optical signal sent by the second optical communication device 802 is used as a reverse optical signal of the first optical communication device 801. The first optical communication device 801 receives the reverse optical signal.

The foregoing describes the optical communication system in this application, and the following describes a preparation method for an optical coupler in this application. FIG. 9 is a schematic flowchart of a preparation method for an optical coupler according to this application. As shown in FIG. 9, the preparation method for an optical coupler includes the following steps.

In step 901, a wafer is provided, where the wafer includes a substrate, a bottom layer, and a waveguide layer in a height direction, and the bottom layer is located between the waveguide layer and the substrate.

In step 902, two sides of the wafer are etched, where an etching depth reaches an interior of the bottom layer; and the bottom layer is divided into a support part and a buried layer that have different widths, where the support part is located between the buried layer and the waveguide layer in the height direction, the width of the support layer is less than the width of the buried layer, and a width of the waveguide layer after the etching is less than the width of the buried layer. For example, the wafer including the substrate, the bottom layer, and the waveguide layer may be plated with a layer of chromium as a hard mask. Then, a photoresist is coated in a spin coating manner, and a waveguide layer graphic is exposed by using a photolithography machine or an electron beam lithography machine. Metal chromium is dry-etched by using the photoresist as a mask. The wafer is dry-etched by using the metal chromium as a mask. An etching depth is a thickness of the waveguide layer and a thickness of the support part. After the etching, the hard mask is removed through wet corrosion.

In step 903, an upper cladding layer is epitaxially grown on an etched wafer. For example, the upper cladding layer may be grown on the etched wafer by using a plasma enhanced chemical vapor deposition (plasma enhanced chemical vapor deposition, PECVD) device.

After the upper cladding layer is grown, a graphic mask of a waveguide of the upper cladding layer may be made by using a chromium plating process, a photoetching process, and a dry etching process. The upper cladding layer is dry-etched by using metal chromium as a mask, so that a shape of the upper cladding layer is a square or a circle in a width direction.

In step 902, the waveguide layer and the support layer are obtained through a same time of etching. In actual application, an upper waveguide layer and a lower waveguide layer that have different widths may be formed through etching by increasing a quantity of etching times. In this case, the lower waveguide layer is located between the support layer and the upper waveguide layer in the height direction. A width of the lower waveguide layer is greater than a width of the lower waveguide.

It should be understood that, for a description of the preparation method for an optical coupler, refer to the foregoing description of the optical coupler. For example, the optical coupler further includes a substrate. For example, the support layer is of a trapezoidal structure in a transmission direction. Widths of the trapezoidal structure gradually decrease in a transmission forward direction. For example, the optical coupler further includes a local part. For example, the upper waveguide layer includes a first part and a second part. In the transmission direction, the first part is of a rectangular structure, and the second part is of a trapezoidal structure. Widths of the trapezoidal structure gradually decrease in the transmission forward direction.

The foregoing descriptions are merely specific implementations of this application, but the protection scope of this application is not limited thereto. Any variation or replacement readily figured out by a person skilled in the art within the technical scope disclosed in this application shall fall within the protection scope of this application.

## Claims

1. An optical coupler, comprising:
a buried layer, a support layer, a waveguide layer, and an upper cladding layer, wherein
in a height direction, the support layer is located between the buried layer and the waveguide layer, and the waveguide layer is located between the support layer and the upper cladding layer; and
in a width direction, the waveguide layer and the support layer are located inside the upper cladding layer, and a material of the waveguide layer is different from a material of the support layer.

2. The optical coupler according to claim 1, wherein a distance between a central position of the waveguide layer and a central position of the upper cladding layer is less than 50 nanometers in the width direction.

3. The optical coupler according to claim 1 or 2, wherein a shape of the upper cladding layer is a square or a circle in the width direction.

4. The optical coupler according to claim 3, wherein the optical coupler is configured to connect to an optical fiber, wherein a diameter of the optical fiber is b micrometers, wherein
a width a of the square is within an interval b ± 0.5 micrometer, or a diameter a of the circle is within an interval b + 0.5 micrometer.

5. The optical coupler according to any one of claims 1 to 4, wherein the support layer comprises a first end face and a second end face in a transmission direction, and an area of the first end face is greater than an area of the second end face.

6. The optical coupler according to claim 5, wherein widths of the support layer gradually decrease in a direction from the first end face to the second end face.

7. The optical coupler according to claim 5 or 6, wherein a width of the second end face is less than 120 nanometers.

8. The optical coupler according to any one of claims 5 to 7, wherein the upper cladding layer covers the second end face in the transmission direction.

9. The waveguide layer according to any one of claims 1 to 8, wherein the waveguide layer is of a trapezoidal structure in the transmission direction.

10. The optical coupler according to any one of claims 1 to 9, wherein the waveguide layer comprises an upper waveguide layer and a lower waveguide layer, and a width of the lower waveguide layer is greater than a width of the upper waveguide layer in the width direction.

11. The optical coupler according to claim 10, wherein the upper waveguide layer comprises a first part and a second part; and in the transmission direction, the first part is of a rectangular structure, a width of the first part is between 400 nanometers and 2000 nanometers, the second part is of a trapezoidal structure, and a minimum width of the trapezoidal structure is less than 120 nanometers.

12. The optical coupler according to claim 10 or 11, wherein the lower waveguide layer comprises a third end face and a fourth end face in the transmission direction, the lower waveguide layer is of a trapezoidal structure, a width of the third end face is greater than a width of the fourth end face, and the width of the fourth end face is less than 120 nanometers.

13. The optical coupler according to any one of claims 10 to 12, wherein a projection of the lower waveguide layer on the buried layer coincides with a projection of the support layer on the buried layer in the transmission direction.

14. The optical coupler according to any one of claims 1 to 13, wherein a refractive index of a material of the upper cladding layer is greater than a refractive index of the material of the support layer.

15. The optical coupler according to any one of claims 1 to 14, wherein the refractive index of the material of the support layer is less than a refractive index of the material of the waveguide layer.

16. The optical coupler according to any one of claims 1 to 15, wherein the material of the support layer is silicon dioxide.

17. The optical coupler according to any one of claims 1 to 16, wherein the material of the support layer is the same as a material of the buried layer.

18. The optical coupler according to any one of claims 1 to 17, wherein the optical coupler further comprises a substrate, and the buried layer is located between the substrate and the support layer in the height direction.

19. The optical coupler according to any one of claims 1 to 18, wherein the optical coupler further comprises a body part, wherein
the body part further comprises a body buried layer, a body waveguide layer, and a body upper cladding layer, the body waveguide layer is located between the body buried layer and the body upper cladding layer, and a thickness of the body waveguide layer is the same as a thickness of the waveguide layer.

20. An optical chip, comprising a first optical component and the optical coupler according to any one of claims 1 to 19, wherein
the optical coupler is configured to: receive a reverse optical signal, reduce a mode spot of the reverse optical signal to obtain the reverse optical signal whose mode spot is reduced, and transmit the reverse optical signal whose mode spot is reduced to the first optical component; and
the first optical component is configured to: receive the reverse optical signal whose mode spot is reduced, and process the reverse optical signal.

21. The optical chip according to claim 20, wherein
the first optical component is further configured to transmit a forward optical signal to the optical coupler; and
the optical coupler is configured to: amplify a mode spot of the forward optical signal, and output the forward optical signal whose mode spot is amplified.

22. An optical communication device, comprising a processor and the optical chip according to claim 20 or 21, wherein
the optical chip is configured to: receive a reverse optical signal, and obtain an input electrical signal based on the reverse optical signal; and
the processor is configured to perform data processing on the input electrical signal.

23. The optical communication device according to claim 22, wherein
the processor is further configured to: generate an output electrical signal, and transmit the output electrical signal to the optical chip; and
the optical chip is further configured to: obtain a forward optical signal based on the output electrical signal, and output the forward optical signal.

24. A preparation method for an optical coupler, comprising:
providing a wafer, wherein the wafer comprises a substrate, a bottom layer, and a waveguide layer in a height direction, and the bottom layer is located between the waveguide layer and the substrate;
etching two sides of the wafer, wherein an etching depth reaches an interior of the bottom layer; and dividing the bottom layer into a support layer and a buried layer that have different widths, wherein the support layer is located between the buried layer and the waveguide layer in the height direction, the width of the support layer is less than the width of the buried layer, and a width of the waveguide layer after the etching is less than the width of the buried layer; and
epitaxially growing an upper cladding layer on an etched wafer.

25. The preparation method according to claim 24, wherein the method further comprises:
etching the upper cladding layer, so that a shape of the upper cladding layer is a square or a circle in a width direction.

26. The preparation method according to claim 24 or 25, wherein the etched wafer comprises an upper waveguide layer and a lower waveguide layer that have different widths, the lower waveguide layer is located between the support layer and the upper waveguide layer in the height direction, and the width of the lower waveguide layer is greater than the width of the lower waveguide.
